(19) Europäisches Patentamt
European Patent Office
Office européen des brevets

(11) EP 1 707 604 A2

(12) EUROPEAN PATENT APPLICATION

(43) Date of publication:
**04.10.2006 Bulletin 2006/40**

(51) Int Cl.:
***C09D 11/00*** *(2006.01)*

(21) Application number: **06006964.8**

(22) Date of filing: **31.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.03.2005 JP 2005101818**
**15.07.2005 JP 2005207142**

(71) Applicant: **FUJI PHOTO FILM CO., LTD.**
**Minami-Ashigara-shi, Kanagawa (JP)**

(72) Inventor: **Kitagawa, Hirotaka**
**Minami-Ashigara-shi**
**Kanagawa (JP)**

(74) Representative: **HOFFMANN EITLE**
**Patent- und Rechtsanwälte**
**Arabellastrasse 4**
**81925 München (DE)**

# (54) Aqueous recording solution for ink jet printing, ink set and ink jet printing device

(57) An aqueous recording solution for ink jet printing contains: a pigment; at least one of a water-soluble organic solvent and a water-soluble organic compound; water; and a dispersant having a molecular weight of 200 to 2, 000, the dispersant being represented by formula (I):

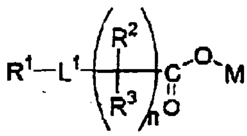

Formula (I)

wherein $R^1$ represents a substituent, $L^1$ represents a single bond or a divalent linking group, $R^2$ and $R^3$ each independently represents a hydrogen atom or a substituent, n represents an integer of 1 or more, and M represents a hydrogen atom or a monovalent cation, provided that $R^1$, $R^2$ and $R^3$ do not have a sulfo group, and the total number of carbon atoms of $R^1$, $R^2$ and $R^3$ is 13 or more.

EP 1 707 604 A2

## Description

## Background of the Invention

1. Field of the Invention

The present invention relates to a aqueous recording solution capable of heightening transparency and improving color reproducibility by fining a pigment, and capable of obtaining high image density by containing the pigment in high concentration. The invention further relates to an aqueous dispersion of pigment suitable for aqueous recording solutions for ink jet printing, gravure printing and writing.

2. Background Art

With the spread of personal computers and Internet, ink jet printers have been prevailed as printing means in offices and homes. In recent years, images such as photographs can be outputted with computers, printing having a high picture quality and highly precise equal to a silver salt photography is required.

Further, considering the application of ink jet printing to the printing field, high speed printing and the aptitude of a recording medium are problems to be solved. In the printing field, so-called art paper and coated paper (hereinafter referred to as the printing paper) are used, but the printing paper is low in absorptivity of the aqueous medium of recording solution, so that the recording solution runs on the printing paper and image quality reduces when the printing paper is used as the recording medium for ink jet printing. For controlling such running of recording solutions, a method of adhering a treating liquid that reacts with a recording solution and agglomerates the recording solution on a recording medium is proposed. As the treating liquids for agglomerating a recording solution, a treating liquid for changing the pH of a recording solution (e.g., JP-A-7-1837 (the term "JP-A" as used herein refers to an "unexamined published Japanese patent application") , Japanese Patent No. 3204756, JP-A-2004-359841), a treating liquid containing polyvalent metal salts (e.g., JP-A-5-202328, JP-A-9-29950), a treating liquid containing a compound having electric charge of reversed polarity to an aqueous recording solution containing a chargeable coloring material (e.g., Japanese Patent No. 2667401), and a treating liquid containing dispersed fine particles having electric charge of reversed polarity to an aqueous recording solution containing a chargeable coloring material (e.g., JP-A-2001-199151) are well known.

In a recording solution for ink jet printing, carbon black is used as a black color recording solution. Aqueous dyes are mainly used in a color recording solution, so that the improvement of weather resistance (light fastness, ozone resistance and water resistance) is required. In particular, in considering the application of ink jet printing to the printing field, the improvement of weather resistance is an especially important problem. Pigments are substantially high in fastness due to their high crystallizability, and ink jet printing solutions using pigments as the colorants have been studied for a long time. When pigments are used, light fastness and water resistance are conspicuously improved as compared with the time when dyes are used, but preservation stability as a recording solution is generally inferior such that accompanied by precipitation. Further, there is a problem to be solved in practical use such that a recording solution is opaque due to light scattering of pigment particles, as a result the color reproducibility of the printed matter is inferior to the dye. Fining of pigment particles is effective in the restraint of precipitation and the improvement of transparency, but the dispersion of fine pigment shows high viscosity, and the pigment particles flocculate and viscosity further increases during preservation for a long period of time, so that dispersion stability is generally inferior. In addition, when high concentration of pigment is added to a recording solution for obtaining an image of high density, the recording solution becomes more viscous and dispersion stability is deteriorated.

As is the state of things, a first object of the above invention is to provide a pigment dispersion suitable for ink jet printing capable of restraining the increase of the viscosity of a recording solution and excellent in stability.

A second object of the above invention in a aqueous recording solution for ink jet printing is to provide an aqueous dispersion of pigment capable of obtaining a high quality image not accompanied by the blotting of the printing paper by increasing the reactivity to a treating liquid.

To well disperse a pigment, a method of adsorbing a dispersant onto the surface of the pigment, and stabilizing the state of dispersion by electrostatic and steric repulsion or by the combination is taken. Specifically, a method of using a low molecular weight surfactant having a hydrophilic moiety, e.g., a sulfo group, a sulfo group and a carboxyl group and a hydrophobic moiety in the molecule (e.g., JP-T-2002-503745 (the term "JP-T" as used herein refers to a "published Japanese translation of a PCT application"), JP-A-2001-192583, Japanese Patent No. 2952944, Japanese Patent No. 2969775, Japanese Patent No. 2970015, JP-A-3-97770), a method of using a pigment derivative having a pigment molecular structure for increasing the adsorbability of a dispersant onto the surface of a pigment (e.g., JP-B-7-78180 (the term "JP-B" as used herein refers to an "examined Japanese patent publication"), JP-B-7-33485, JP-B-3-14073, JP-B-55-6668) are well known. However, since a pigment derivative causes coloring due to the chemical structure of the parent body of a pigment derivative, the pigment derivative treatment lacks general-purpose properties and, further,

there are cases where the crystallizability of a pigment decreases by the addition of a pigment derivative and fastness is impaired. As other method, polymer compounds of random and block structures having a hydrophilic moiety and a hydrophobic moiety is used as a dispersant (e.g., JP-A-54-10023, JP-A-56-147863, JP-A-56- 147868, JP-A-56-147871). Microencapsulated pigments using a polymer dispersant having high hydrophobicity for raising the adsorptivity of a dispersant onto pigment surface are disclosed. As the microencapsulating methods, a phase inversion method, a coasevation (phase separation) method, and an in situ polymerization method are used (e.g., JP-A-9-279053, JP-A-9-279073), but these methods are great in load in the process of manufacture of a pigment dispersion in practice, and there is also a problem that a refining process to remove unnecessary substances is necessary. Further, dispersants containing a sulfo group as the hydrophilic moiety have a drawback that they are low in agglomeration.

## Summary of the Invention

An object of the invention is to provide an aqueous dispersion of a pigment having high dispersion stability, and another object is to provide high grade printing by imparting reactivity to a low molecular weight dispersant with a treating liquid.

The above objects of the invention have be achieved by the following means on the basis of the fact that an aqueous dispersion of a pigment (referred to as a pigment dispersion) having high dispersion stability can be obtained by using a specific low molecular weight dispersant.

(1) An aqueous recording solution for ink jet printing (referred to as recording solution or a aqueous recording solution) containing: a pigment; at least one of a water-soluble organic solvent and a water-soluble organic compound; water; and a dispersant having a molecular weight of 200 to 2,000, the dispersant being represented by formula (I):

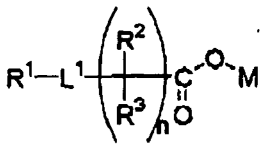

Formula (I)

wherein $R^1$ represents a substituent, $L^1$ represents a single bond or a divalent linking group, $R^2$ and $R^3$ each independently represents a hydrogen atom or a substituent, n represents an integer of 1 or more, and M represents a hydrogen atom or a monovalent cation, provided that $R^1$, $R^2$ and $R^3$ do not have a sulfo group, and the total number of carbon atoms of $R^1$, $R^2$ and $R^3$ is 13 or more.

(2) The aqueous recording solution for ink jet printing as described in the above item (1), wherein $R^1$ represents a substituted or unsubstituted alkyl group, and $R^2$ represents an aryloxy group.

(3) The aqueous recording solution for ink jet printing as described in the above item (1), wherein $L^1$ is one of an amido group, a sulfonamido group, an ester group, -O- and -S-.

(4) The aqueous recording solution for ink jet printing as described in the above item (1) , wherein the dispersant is represented by one of formulae (X) and (XI):

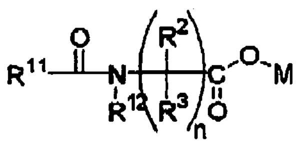

Formula (X)

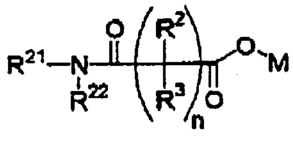

Formula (XI)

wherein $R^2$ and $R^3$ each independently has the same meaning as in formula (I), $R^{11}$ and $R^{21}$ each independently represents a substituted or unsubstituted alkyl group, aryl group, or a heterocyclic group, $R^{12}$ and $R^{22}$ each independently represents a hydrogen atom or a substituted or unsubstituted alkyl group, and n represents an integer of 1 or more.

(5) The aqueous recording solution for ink jet printing as described in the above item (1), which has a coefficient of viscosity at 25°C of 1 to 20 mPa/s.

(6) The aqueous recording solution for ink jet printing as described in the above item (1) , which has a volume average particle size measured by a dynamic light scattering method of 10 to 150 nm.

(7) The aqueous recording solution for ink jet printing as described in the above item (1), wherein the pigment particles have a ratio of the long axis to the short axis of 3 or less,

(8) The aqueous recording solution for ink jet printing as described in the above item (1), which contains from 10 to 25 mass% of the pigment.

(9) An ink set containing: a treating liquid that improve at least one of printing velocity, image quality, fixability and preservation stability; and a aqueous recording solution for ink jet printing as claimed in the above item (1).

(10) The ink set as described in the item (9), wherein the treating liquid is a liquid for agglomerating the recording solution by the variation of pH.

(11) An ink jet printing device comprising the ink set as claimed in the above item (9).

By using a low molecular weight dispersant of the invention, the agglomeration phenomenon of a pigment by pH variation, which is difficult by a sulfo group, can be improved, so that high dispersion stability can be realized.

## Detailed Description of the Invention

In formula (I), $R^1$ represents a substituent, $L^1$ represents a single bond or a divalent linking group, $R^2$ and $R^3$ each represents a hydrogen atom or a substituent, M represents a hydrogen atom or a monovalent cation, and n represents an integer of 1 or more, provided that $R^1$, $R^2$ and $R^3$ do not have a sulfo group, and the total number of carbon atoms of $R^1$, $R^2$ and $R^3$ is 13 or more (preferably 160 or less) . The molecular weight of the dispersant represented by formula (I) is preferably from 200 to 2,000, and more preferably from 200 to 1,000.

The examples of the above substituents include, e.g., an alkyl group [a straight chain, branched or cyclic, substituted or unsubstituted alkyl group including an alkyl group (preferably an alkyl group having from 1 to 30 carbon atoms, e.g., methyl, ethyl, n-propyl, isopropyl, t-butyl, s-butyl, n-hexyl, n-octyl, n-lauryl) , a cycloalkyl group (preferably a substituted or unsubstituted cycloalkyl group having from 5 to 30 carbon atoms, e.g., cyclohexyl, cyclopentyl, 4-n-dodecylcyclohexyl)], an aryl group (preferably a substituted or unsubstituted aryl group having from 6 to 30 carbon atoms, e. g. , phenyl, p-dodecylphenyl, naphthyl, p-hexadecyloxyphenyl), a hterocyclic group (preferably a monovalent group obtained by removing one hydrogen atom from a 5- or 6-membered substituted or unsubstituted aromatic or non-aromatic heterocyclic compound, more preferably a 5- or 6-membered substituted or unsubstituted aromatic heterocyclic group having from 3 to 30 carbon atoms, e.g., 2-furyl, 2-thienyl, 2-pyrimidinyl, 2-benzothiazolyl, pyridyl), a hydroxyl group, an alkoxyl group (preferably a substituted or unsubstituted alkoxyl group having from 1 to 30 carbon atoms, e.g., methoxy, ethoxy, isopropoxy, t-butoxy, n-octyloxy, 2-methoxyethoxy), an aryloxy group (preferably a substituted or unsubstituted aryloxy group having from 6 to 30 carbon atoms, e.g., phenoxy, 2-methylphenoxy, 4-t-butylphenoxy, 4-n-dodecyloxyphenoxy, 1-naphthoxy), a heterocyclic oxy group (preferably a substituted or unsubstituted heterocyclic oxy group having from 2 to 30 carbon atoms, e.g., 1-phenyltetrazol-5-oxy, 2-tetrahydropyranyloxy), an acyloxy group (preferably a substituted or unsubstituted alkylcarbonyloxy group having from 2 to 30 carbon atoms, a substituted or unsubstituted arylcarbonyloxy group e.g., having from 6 to 30 carbon atoms, e.g., acetoxy, pivaloyloxy, stearoyloxy, benzoyloxy, p- methoxyphenylcarbonyloxy), a carbamoyloxy group (preferably a substituted or unsubstituted carbamoyloxy group having from 1 to 30 carbon atoms, e.g., N,N-dinethylcarbamoyloxy, N,N- diethylcarbamoyloxy, morpholinocarbonyloxy, N,N-di-n- octylaminocarbonyloxy, N-n-octylcarbamoyloxy), an alkoxy- carbonyloxy group (preferably a substituted or unsubstituted alkoxycarbonyloxy group having from 2 to 30 carbon atoms, e.g., methoxycarbonyloxy, ethoxycarbonyloxy, t-butoxycarbonyloxy, n-octylcarbonyloxy), an aryloxycarbonyloxy group (preferably a substituted or unsubstituted aryloxycarbonyloxy group having from 7 to 30 carbon atoms, e.g., phenoxycarbonyloxy, p-methoxyphenoxycarbonyloxy, p-n-hexadecyloxyphenoxy- carbonyloxy), an amino group (preferably an amino group, a substituted or unsubstituted alkylamino group having from 1 to 30 carbon atoms, a substituted or unsubstituted arylamino group having from 6 to 30 carbon atoms, e.g., amino, methylamino, dimethylamino, anilino, N-methylanilino, diphenylamino), an acylamino group (preferably a substituted or unsubstituted alkylcarbonylamino group having from 2 to 30 carbon atoms, a substituted or unsubstituted arylcarbonyl- amino group having from 6 to 30 carbon atoms e.g., acetylamino, pivaloylamino, lauroylamino, benzoylamino), an aminocarbanylamino group (preferably a substituted or unsubstituted aminocarbonylamino group having from 1 to 30 carbon atoms e.g., carbamoylamino, N,N-dimethylaminocarbonylamino, N,N-diethylaminocarbonylamino, morpholinocarbonylamino), an alkoxycarbonylamino group (preferably a substituted or unsubstituted alkoxycarbonylamino group having from 1 to 30 carbon atoms e.g., methoxycarbonylamino, ethoxycarbonylamino, t-butoxycarbonylamino, n-octadecyloxy- carbonylamino, N-methylmethoxycarbonylamino), an aryloxy- carbonylamino group (preferably a substituted or unsubstituted aryloxycarbonylamino group having from 7 to 30 carbon atoms e.g., phenoxycarbonylamino, p-chlorophenoxy- carbonylamino, m-n-octyloxyphenoxycarbonylamino), a sulfamoylamino group (preferably a substituted or unsubstituted sulfamoylamino group having from 0 to 30 carbon atoms e.g., sulfamoylamino, N, N-dimethylaminosulfonylamino, N-n-octylaminosulfonylamino), an alkylsulfonylamino group and an arylsulfonylamino group (preferably a substituted or unsubstituted alkylsulfonylamino group having from 1 to 30 carbon atoms, a substituted or unsubstituted arylsulfonyl- amino group having from 6 to 30 carbon atoms, e.g., methyl- sulfonylamino, butylsulfonylamino, phenylsulfonylamino, 2,3,5-trichlorophenylsulfonylamino, p-methylphenylsulfonyl- amino), a mercapto group, an alkylthio group (preferably a substituted or unsubstituted alkylthio group having from 1 to 30 carbon atoms, e.g., methylthio, ethylthio, n-hexadecyl- thio) , an axylthio group (preferably a substituted or unsubstituted arylthio group having from 6 to 30 carbon atoms, e.g., phenylthio, p-chlorophenylthio, m-methoxyphenylthio), a heterocyclic thio group (preferably a substituted or unsubstituted heterocyclic thio group having from 2 to 30 carbon atoms, e.g., 2-benzothiazolylthio, 1-phenyltetrazol- 5-ylthio), a sulfamoyl group (preferably a substituted or unsubstituted sulfamoyl group having from 0 to 30 carbon atoms, e.g., N-ethylsulfamoyl, N-(3-dodecyloxypropyl)sulfamoyl, N,N-dimethylsulfamoyl, N-acetylsulfamoyl, N-benzoyl- sulfamoyl, N-(N'-phenylcarbamoyl)sulfainoyl), an alkyl- sulfinyl group and an arylsulfinyl group (preferably a substituted or unsubstituted alkylsulfinyl group having from 1 to 30 carbon atoms, e.g., a substituted or unsubstituted arylsulfinyl group having from 6 to 30 carbon atoms, e.g., methylsulfinyl, ethylsulfinyl, phenylsulfinyl, p-methyl- phenylsulfinyl), an alkylsulfonyl group and an arylsulfonyl group (preferably a substituted or unsubstituted alkylsulfonyl group having from 1 to 30 carbon atoms, a substituted or unsubstituted arylsulfonyl group having from 6 to 30 carbon atoms, e.g., methylsulfonyl, ethylsulfonyl, t-butylsulfonyl, s-butylsulfonyl, phenylsulfonyl, pyridylsulfonyl, p-methylphenylsulfonyl), an acyl group (preferably a substituted or unsubstituted alkylcarbonyl group having from 2 to 30 carbon atoms, a substituted or unsubstituted arylcarbonyl group having from 7 to 30 carbon atoms, a substituted or unsubstituted heterocyclic carbonyl group having from 4 to 30 carbon atoms bonded to a carbonyl group through a carbon atom, e.g., pivaloyl, 2-chloroacetyl, stearoyl, benzoyl, p-n-octyloxyphenyl- carbonyl, 2-pyridylcarbonyl, 2-furylcarbonyl), an aryloxycarbonyl group (preferably a substituted or unsubstituted aryloxycarbonyl group having from 7 to 30 carbon atoms, e.g., phenoxycarbonyl, o-chlorophenoxycarbonyl, m-nitrophenoxy- carbonyl, p-t-butylphenoxycarbonyl), an alkoxycarbonyl group (preferably a substituted or unsubstituted alkoxycarbonyl group having from 2 to 30 carbon atoms, e.g., methoxycarbonyl, ethoxycarbonyl, t-butoxycarbonyl, n-octadecyloxycarbonyl), a carbamoyl group (preferably a substituted or unsubstituted carbamoyl group having from 1 to 30 carbon atoms, e.g., carbamoyl, N-methylcarbamoyl, N,N-dimethylcarbamoyl, N,N-di- n-octylcarbamoyl, N-(methylsulfonyl)carbamoyl), and an imido group (preferably N-succinimido, N-phthalimido). $R^1$ represents a substituent, preferably an alkyl group, an aryl group or a heterocyclic group, and more preferably an alkyl group.

$R^2$ represents a hydrogen atom or a substituent, preferably a substituent, more preferably an alkyl group, an aryl group, a heterocyclic group, a hydroxyl group, an alkoxyl group, an aryloxy group, a heterocyclic oxy group, an acylamino group, an alkylsulfonylamino group, an arylsulfonylamino group, a mercapto group, an alkylthio group, an arylthio group, a heterocyclic thio group, or a carbamoyl group, still more preferably an alkoxyl group, an aryloxy group, an acylamino group, an alkylsulfonylamino group, an arylsulfonylamino group, an alkylthio group, an arylthio group, or a heterocyclic thio group, and most preferably an aryloxy group.

$R^3$ represents a hydrogen atom or a substituent, preferably a hydrogen atom or an alkyl group, and more preferably a hydrogen atom. n represents an integer of 1 or more, preferably from 1 to 21, and more preferably from 1 to 5.

$L^1$ represents a single bond or a divalent linking group, and as the divalent linking group, an amido group, a sulfonamido group, an ester group, -O- or -S- is preferred, and an amido group is especially preferred.

$R^1$, $R^2$ and $R^3$ do not have a sulfo group, and the total number of carbon atoms of $R^1$, $R^2$ and $R^3$ is 13 or more, preferably 15 or more, and more preferably 160 or less. It is more preferred that any one of $R^1$, $R^2$ and $R^3$ has one or more hetero atoms.

M represents a hydrogen atom or a monovalent cation. As the monovalent cation, alkali metal atoms of lithium, sodium, or potassium, ammonium, quaternary ammonium, imidazolium, sulfonium, and iodonium are exemplified. M preferably represents a hydrogen atom, a monovalent alkali metal atom, or quaternary ammonium, and more preferably a hydrogen atom, lithium, sodium or potassium.

As a preferred embodiment, a combination in which $R^1$, $R^2$, $R^3$, n, $L^1$ and M respectively represent an alkyl group, an aryloxy group, a hydrogen atom, 1, a single bond, and a hydrogen atom is exemplified.

The specific examples of the dispersants represented by formula (I) are shown below.

Compound (1-1) Sodium Oleate

$CH_3(CH_2)_7CH=CH(CH_2)_7CO_2Na$

**Compound (1-3)**

$C_{12}H_{25}S(CH_2)_{10}CO_2H$

Compound (1-4)

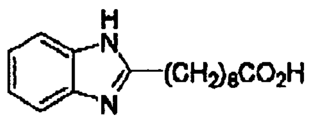

Compound (1-5)

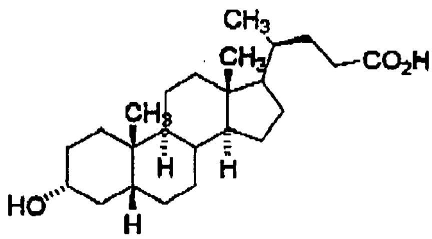

Compound (1-6)

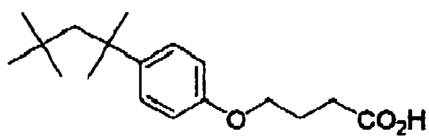

Compound (1-7)

$C_{16}H_{33}SO_2(CH_2)_3CO_2H$

Compound (1-8)

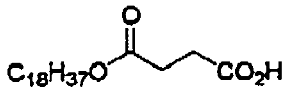

**Compound (1-10)**

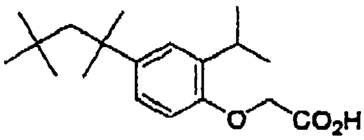

Compound (I-11)

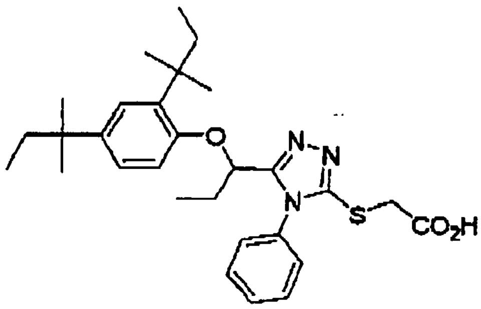

Compound (2-1)

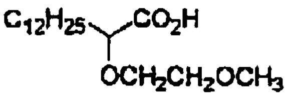

Compound (2-2)

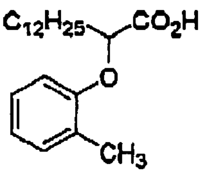

Compound (2-3)

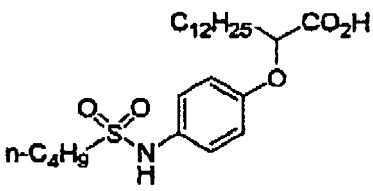

Compound (2-4)

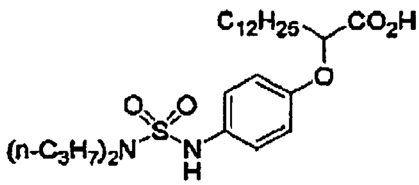

Compound (2-5)

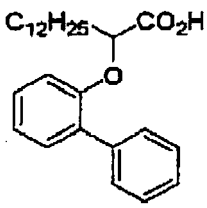

Compound (2-6)

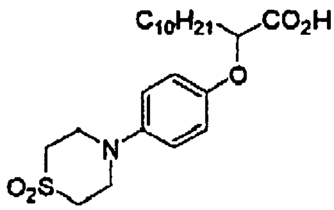

Compound (2-7)

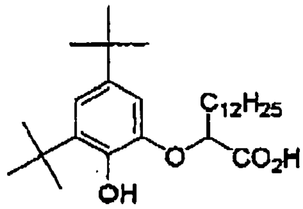

**Compound (2-8)**

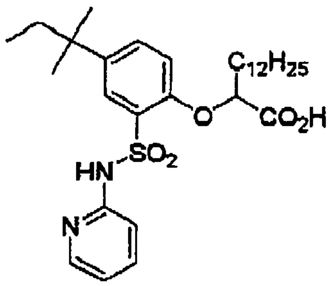

Compound (2-9)

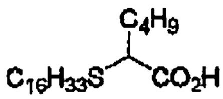

Compound (2-10)

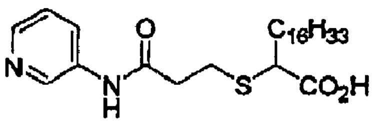

Compound (2-11)

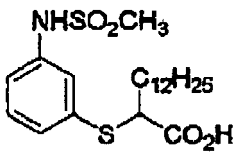

Compound (2-12)

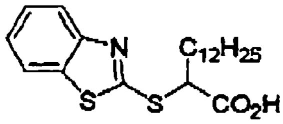

Compound (2-13)

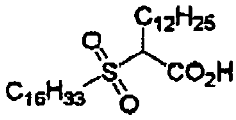

**Compound (2-14)**

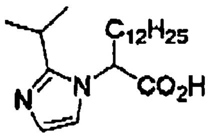

Compound (2-15)

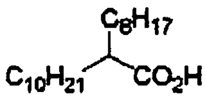

Compound (2-16)

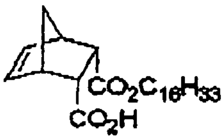

**Compound (3-1)**

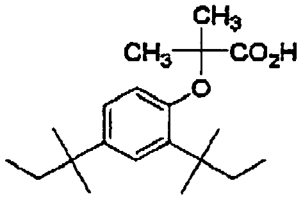

Compound (3-2) Sodium Abietate

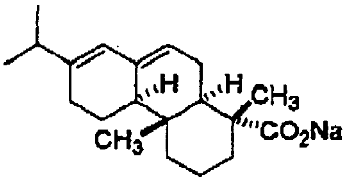

Compound (3-3)

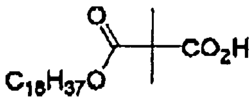

Compounds containing the substituents selected from the following group $R^1$, $R^2$ and $R^3$ can also be preferably used.

| $R^1$ | $R^2$ | $R^3$ |
|---|---|---|
| $C_{12}H_{25}-$ | $H-$ | $H-$ |
| $C_{17}H_{35}-$ | $CH_3-$ | $CH_3-$ |
| $CH_3(CH_2)_7CH=CH(CH_2)_7-$ | $C_6H_{13}-$ | 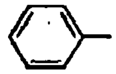 |
| 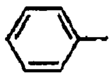 | $HO-$ | 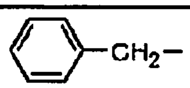 |
| 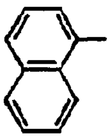 | $C_8H_{17}O-$ | |
| 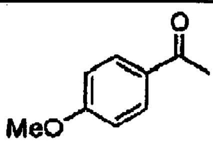 | 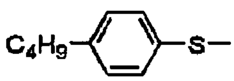 | |
| 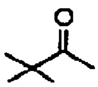 | 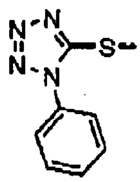 | |
| | 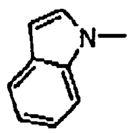 | |
| | 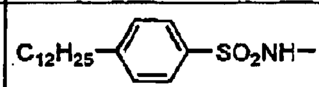 | |
| | $HSCH_2-$ | |

It is also preferred that the dispersant represented by formula (I) has a structure represented by formula (X) or (XI) . In formulae (X) and (XI), $R^2$ and $R^3$ each has the same meaning as in formula (I), $R^{11}$ and $R^{21}$ each represents an alkyl group, an aryl group, or a heterocyclic group, each of which may have a substituent, $R^{12}$ and $R^{22}$ each represents a hydrogen atom or an alkyl group which may be substituted, and n represents an integer of 1 or more. $R^{11}$ preferably represents an alkyl group which may be substituted, $R^{12}$ preferably represents a hydrogen atom or a lower alkyl group (more preferably an alkyl group having from 1 to 4 carbon atoms, and most preferably a methyl group). It is preferred that one of $R^{12}$ and $R^{22}$ represents a hydrogen atom, and the other represents an alkyl group (preferably an alkyl group having from 1 to 20 carbon atoms) . n preferably represents an integer of from 1 to 21, and more preferably an integer of from 1 to 5.

The specific examples of the dispersants represented by formula (X) or (XI) are shown below, but it should not be construed that the invention is restricted to these dispersants.

Compound (X-1)

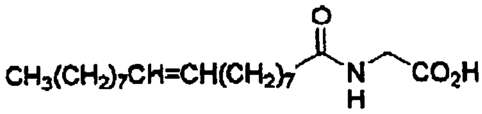

Compound (X-2)

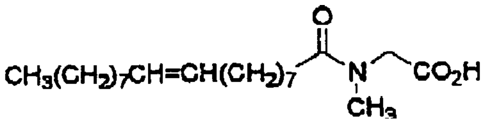

**Compound (X-3)**

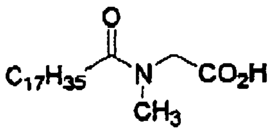

**Compound (x-4)**

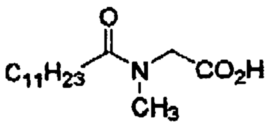

Compound (X-5)

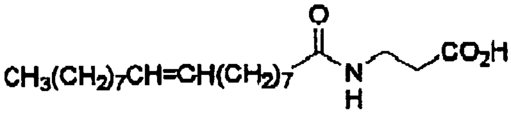

Compound (X-6)

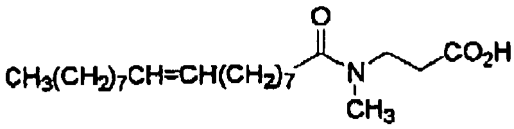

**Compound (X-7)**

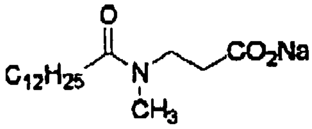

Compound (X-8)

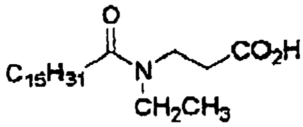

Compound (X-9)

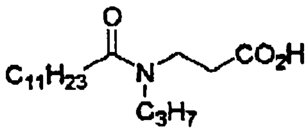

Compound (X-10)

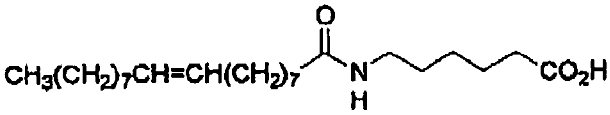

**Compound (X-11)**

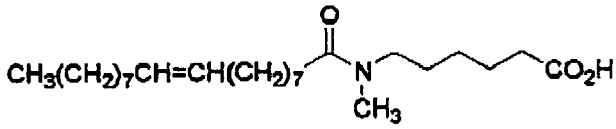

Compound (X-12)

$C_{11}H_{23}CONH(CH_2)_{11}CO_2H$

Compound (X-13)

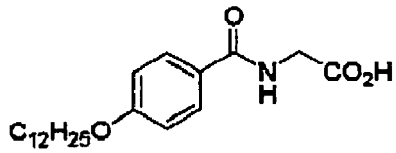

Compound (XI-1)

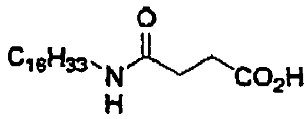

Compound (XI-2)

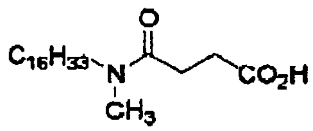

Compound (XI-3)

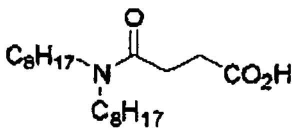

Compound (XI-4)

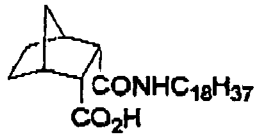

**Compound (XI-5)**

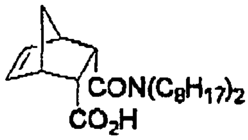

Compound (XI-6)

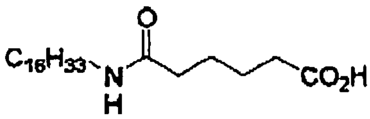

**Compound (XI-7)**

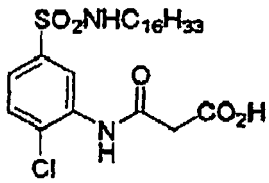

As the pigments for use in a dispersion of pigment (preferably a recording solution) in the invention, color substances (including white in inorganic pigments) hardly soluble in water or an organic solvent are exemplified. The preferred pigments as a recording solution, carbon black, azo pigments, quinacridone pigments, phthalocyanine pigments, anthraquinone pigments, indigo pigments, dioxazine pigments, perylene pigments, perinone pigments, isoindolinone pigments, isoindoline pigments, quinophthalone pigments, diketo- pyrrolopyrole pigments, and metal complex pigments are exemplified.

As azo pigments, PR-1, PR-3, PO-5, PR-21, PR-2, PR-112, PR-114, PR-5, PR-146, PR-170, PO-38, PR-187, PR-150, PR-185, PBr-25, PY-1, PY-3, PY-74, PY-97, PY-167, PY-151, PY-154, PY-180, PO-36, PY-12, PY-13, PY-14, PY-17, PY-55, PY-83, PY-81, PO-16, PY-10, PO-13, PO-34, PR-38, PR-41, PR-144, PR-166, PR-214, PR-242, PY-155, PY-93, PY-94, PY-95, PY-166 and PY-128 are exemplified. As quinacridone pigments, PV-19, PR-122, PR-202, PR-206, PR-207, PR-209 and PO-48 are exemplified. As phthalocyanine pigments, PB-15, PB-15:1, PB-15:2, PB-15:3, PB-15:4, PB-15:5, PB-15:6, PB-16, PB-17:1, PG-7, PG-36, PG-37, and crosslinked aluminum phthalocyanine pigments disclosed in U.S. Patent 4,311,775 are exemplified. As anthraquinone pigments, PY-24, PY-108, PO-51, PR-168, PR-177 and PB-60 are exemplified. As indigo pigments, PB-66, PB-63, PR-88, PR-181 and PBr-27 are exemplified. As

dioxazine pigments, PV-23 and PV-37 are exemplified. As perylene pigments, PR-123, PR-149, PR-178, PR-179, PR-190, PR-224, PV-29, PBk-31 and PBk-32 are exemplified. As perinone pigments, PO-43 and PR-194 are exemplified. As isoindolinone pigments, PY-109, PY-110, PY-173 and PO-61 are exemplified. As isindoline pigments, PY-139, PY-185, PO-66, PO-69 and PR-260 are exemplified. As quinophthalone pigment, PY-138 is exemplified. As diketopyrropyrole pigments, PO-71, PO-73, PR-254, PR-255, PR-264, PR-270 and PR-272 are exemplified. As metal complex pigments, PG-8, PG-10, PY-150, PY-129, PY-153, Py-65, PO-68 and PR-257 are exemplified.

As the pigments for use in a aqueous recording solution for ink jetprinting, PB-7, PY-74, PY-93, PY-94, PY-95, PY-109, PY-110, PY-128, PY-138, PY-150, PY-151, PY-154, PY-155, PY-180, PR-5, PV-19, PR-122, PR-202, PB-15:3, PB-15:4, PB-16 are preferred, and PB-7, PY-74, PY-128, PR-122 and PB-15:3 are more preferred.

These pigments are preferably blended in a recording solution in the range of from 1 to 40 mass%, more preferably from 5 to 30 mass%, and most preferably from 10 to 25 mass%. In view of fastness, preservation stability and transparency, the volume average particle size of pigments by a dynamic light scattering method is preferably from 10 to 150 nm, more preferably from 30 to 100 nm, and most preferably from 50 to 80 nm. The ratio of the long axis and short axis of pigment particles observed with a transmission electron microscope is preferably 3 or less, more preferably 2 or less, and most preferably 1.5 or less.

An aqueous medium for use in the aqueous recording solution for ink jet printing in the invention is preferably contained in the recording solution in the range of from 70 to 98 mass%, more preferably from 72 to 92 mass%, and most preferably from 75 to 85 mass%.

At least one kind of water-soluble organic solvent or water-soluble organic compound is contained as the aqueous medium with water (distilled water and ion exchange water) for the purpose of the moisture retention, freezing prevention, hydrotropy and permeation acceleration. For example, ethylene glycol, propylene glycol, butylene glycol, diethylene glycol, triethylene glycol, glycerol, trimethylol- propane, sorbitol, 1,2,6-hexanetriol, diethylene glycol monobutyl ether, triethylene glycol monomethyl ether, triethylene glycol monoethyl ether, triethylene glycol monoisopropyl ether, triethylene glycol mono-n-butyl ether, 2-pyrrolidone, N-methyl-2-pyrrolidone, N-ethyl-2- pyrrolidone, 2-piperidone, N-methyl-2-piperidone, δ-valerolactone, ε-caprolactone, N-methyl-ε-caprolactone, succinimide, 1,3-dimethyl-2-imidazolidinone, urea, 1,3- dimethylurea, 1,3-bis(hydroxymethyl)urea, ethyleneurea, 3-methyl-2-oxazolidinone, propylene carbonate, and sulforan are exemplified, and preferably diethylene glycol, triethylene glycol, glycerol, trimethylolpropane, triethylene glycol monomethyl ether, urea, 1,3- dimethylurea and 2-pyrrolidone are exemplified.

Of the water-soluble organic solvents, those having a boiling point of 200°C or more are preferred, more preferably 240°C or more, and most preferably 250°C or more are. The water-soluble organic solvents and the water-soluble organic compounds are used alone or in combination of two or more. The total mass of the organic solvents and the organic compounds is preferably from 1 to 40 mass% in the recording solution, and more preferably from 10 to 30 mass%.

It is preferred for the aqueous recording solution for ink jet printing to contain a surfactant for the purpose of adjusting the surface tension of the recording solution to thereby to control the ejecting property, spreading of ink droplets on the recording paper, and permeation into the recording paper. As the surfactants, an anionic surfactant, a cationic surfactant, an ampholytic surfactant, a nonionic surfactant, a fluorine surfactant, and a silicone surfactant are used.

As anionic surfactants, fatty acid salt, naphthenate, alkyl ether carboxylate, N-acyl-N-alkylamino acid salt, alkylbenzenesulfonate, alkylnaphthalenesulfonate, alkane or olefin sulfonate, N-acyl-N-methyltaurine salt, dialkylsulfosuccinate, α-sulfo-fatty acid ester, alkylsulfate, alkyl- polyoxyalkylene ether sulfate, arylpolyoxyalkylene ether sulfate, and alkylphosphate are exemplified. As cationic surfactants, amine salt, aliphatic quaternary ammonium salt, quaternary ammonium salt having a benzyl group, pyridinium salt, sulfonium salt, and phosphonium salt are exemplified. The examples of ampholytic surfactants include amino acid type and betaine type compounds. As nonionic surfactants, polyoxy- alkylene alkyl ether, polyoxyalkylene aryl ether, sorbitan fatty acid ester, sorbitol fatty acid ester, polyoxyethylene sorbitan fatty acid ester, polyoxyethylene sorbitol fatty acid ester, glycerol fatty acid ester, acetylenediol, and ethylene oxide adducts of acetylenediol are exemplified. As fluorine surfactants, the compounds disclosed in JP-A-2003-322926, JP-A-2004-325707, and JP-A-2004-309806 can be used. The recording solution in the invention has static surface tension of preferably from 20 to 50 mN/m, and more preferably from 25 to 40 mN/m.

Furthermore, in case that the aqueous recording solution of the invention having a coefficient of viscosity at 25°C is over 20mPa/s, a lot of energy are needed in order to spit the recording solution through the nozzle of the ink jet printing device. So, it is preferable that the recording solution of the invention having a coefficient of viscosity at 25°C is below 20mPa/s, because printing heads of the Ink jet printing device which give such energy can not be easily made.

For the purpose of the improvement of the fixing property of a recording solution, emulsified substance, e.g., acrylic series, aqueous urethane series, styrene-butadiene series, styrene-isoprene series, styrene-butadiene-(meth) acrylic acid copolymer series, or polyester series polymers can be added to the aqueous recording solution for ink jet printing in the invention. Preferred emulsified substances are styrene-butadiene-(meth)acrylic acid copolymers, and as commercially available emulsified substances, LACSTAR-3307B, 7132c, Nipol Lx416 are exemplified. Too much addition amount exerts a harmful influence on the recording solution, so that the amount is preferably from 1 to 20 mass% to he

recording solution, and more preferably from 5 to 15 mass%.

Besides the above compounds, if necessary, the aqueous recording solution for ink jet printing in the invention can contain a pH adjustor, an antiseptic, an antifungal agent, a rust preventive, a defoaming agent, antioxidant and a discoloration inhibitor.

As the pH adjustors, inorganic acids, e.g., hydrochloric acid, sulfuric acid and phosphoric acid, organic acids, e.g., acetic acid and benzoic acid, hydroxides, e.g., sodium hydroxide, halides, e.g., amonium chloride, sulfates, e.g., sodium sulfate, carbonates, e.g., potassium carbonate and sodium hydrogencarbonate, phosphates, e.g., sodium hydrogen- phosphate and sodium dihydrogenphosphate, organic acid salts, e.g., ammonium acetate and sodium benzoate, and various kinds of amines, e.g., tributylamine and triethanolamine are exemplified. The pH value of the recording solution of the invention is preferably from 6 to 10, and more preferably from 7 to 9. As the antiseptics and antifungal agents, sodium dehydroacetate, 1,2-benzothiazolin-3-one, sodium benzoate, 4-hydroxybenzoic acid derivatives and 4-hydroxybenzoate derivatives, sodium 2-pyridinethione-1-oxide, salicylic acid, phenols, chloromethylphenol, phenoxyethanol, sorbic acid, and quaternary ammonium salts are exemplified. As the rust preventives, chelating agents, e.g., ethylenediainetetra- acetate, and solubilizers, e.g., benzotriazole and oleic acid are exemplified. As the defoaming agents, silicone compounds, acetylenediol and ethylene oxide adducts of these compounds are exemplified. As the antioxidants and discoloration inhibitors, sulfite, ethylenediaminetetraacetic acid, hindered phenol series antioxidants, phosphite series antioxidants, and thioether series antioxidants are exemplified.

For the preparation of the pigment dispersion of the invention, ordinary known dispersing methods can be used with no restriction, e.g., a ball mill, a sand mill, a roll mill, an attritor, a kneader, a disperser, and an ultrasonic wave dispersing method can be used.

As the prescriptions of the manufacture of the pigment dispersion of the invention, generally used prescriptions of making a pigment dispersion of a mixed solution of at least a pigment, a dispersant and water with a disperser, and then adding a water-soluble organic solvent and various additives to prepare a aqueous recording solution, and a prescription of dispersing a pigment mixed solution comprising a water-soluble organic solvent and various additives previously mixed with a disperser to thereby prepare a aqueous recording solution can be used. Further, dispersion may be performed with a powdery pigment, or paste-like press cake of a pigment may be directly dispersed without performing drying.

EXAMPLE

The invention will be described with reference to Examples, but the invention is not limited thereto.

EXAMPLE 1

Synthesis of Compound (2-3)

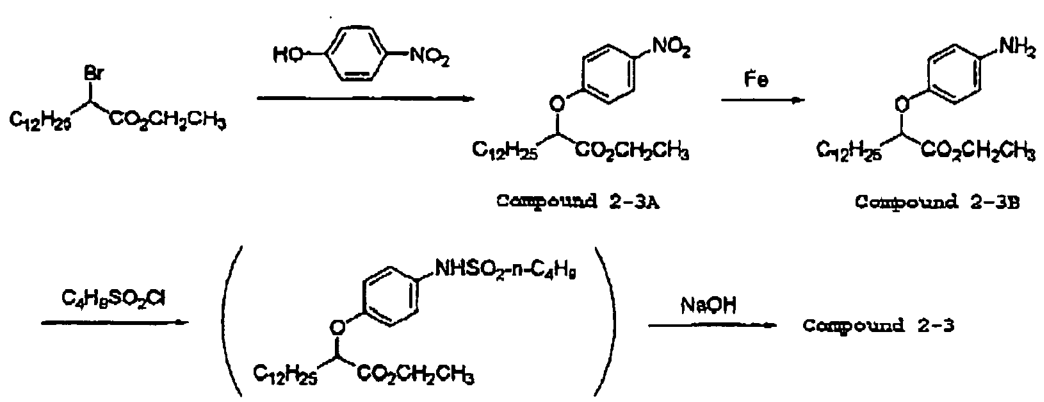


A mixed solution comprising 335 g (1.0 mol) of ethyl 2-bromomyristate, 166.8 g (1.2 mol) of p-nitrophenol, 414 g (3.0 mol) of potassium carbonate, and 700 ml of dimethyl- formamide was allowed to react for 3 hours with stirring while heating. The reaction solution was allowed to cool and then added to 5 liters of water. The solution was extracted

by adding 2.5 liters of ethyl acetate and 2.5 liters of hexane, and then washed with aqueous sodium bicarbonate, distilled water and brine. By concentrating the obtained organic layer, 393 g of oily compound (2-3A) (1.0 mol, yield: 100%) was obtained.

A mixed solution comprising 224 g (4.0 mol) of iron powder, 10 g (0.19 mol) of ammonium chloride, 400 ml of isopropyl alcohol, and 150 ml of water was stirred, refluxed with heating, and 393 g (1.0 mol) of compound (2-3A) was slowly dripped to the solution. After completion of dripping, the reaction solution was further refluxed with heating for further 1.5 hours. After the termination of reaction was confirmed with TLC, the reaction solution was cooled. The reaction solution was filtered through sellaite, and crystals were precipitated by the concentration of the filtrate. The crystals were recovered by filtration and dried, whereby 361 g (0.99 mol, yield: 99%) of compound (2-3B) was obtained.

A mixed solution comprising 83.0 g (0.23 mol) of compound (2-3B) , 21.8 g (0.28 mol) of pyridine, and 200 ml of tetrahydrofuran was stirred and refluxed with heating, and 43.0 g (0.28 mol) of 1-butanesulfonyl chloride was dripped to the solution. After completion of dripping, the reaction solution was refluxed with heating for further 1 hour. After the termination of reaction was confirmed with TLC, the reaction solution was cooled. The solution was extracted by adding 1 liter of aqueous hydrochloric acid and 1 liter of ethyl acetate, and then washed with aqueous hydrochloric acid, aqueous sodium bicarbonate, distilled water and brine, and concentrated. Sodium hydroxide (20 g), 400 ml of ethanol and 100 ml of water were added to the concentrate, and the mixture was stirred and refluxed with heating to react for 3 hours. After the termination of reaction was confirmed with TLC, the reaction solution was cooled. The reaction solution was poured to 1.5 liters of water, and then hydrochloric acid was added to thoroughly acidify the aqueous solution. After that, the reaction solution was extracted with ethyl acetate. The extract was washed with dilute aqueous hydrochloric acid, and crystals were precipitated by the concentration of the extract. The crystals were dispersed by the addition of 1 liter of hexane and 100 ml of ethyl acetate, recovered by filtration and dried, whereby 99.0 g (0.22 mol, yield: 95%) of compound (2-3) was obtained.

EXAMPLE 2

Synthesis of Compound (2-6)

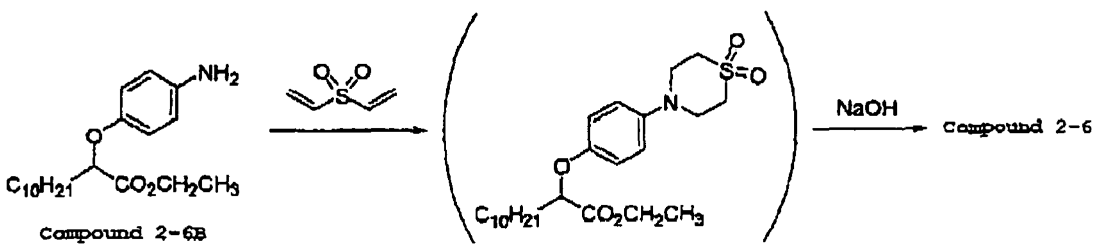


Compound 2-6B

A mixed solution comprising 33.6 g (0.10 mol) of compound (2-6B) synthesized in the same manner as in Example 1 using ethyl 2-bromolaurate as the starting material, 15.4 g (0.13 mol) of divinylsulfone, and 150 ml of ethanol was allowed to react for 10 hours with stirring while heating to 80°C. After the termination of reaction was confirmed with TLC, the reaction solution was concentrated. The concentrate was dissolved in ethyl acetate, washed with aqueous hydrochloric acid, aqueous sodium bicarbonate, distilled water and brine, and again concentrated. Sodium hydroxide (10 g), 200 ml of ethanol and 100 ml of water were added to the concentrate, and the mixture was stirred and refluxed with heating to react for 3 hours. After the termination of reaction was confirmed with TLC, the reaction solution was cooled. The reaction solution was poured to 750 ml of water, and then hydrochloric acid was added to thoroughly acidify the aqueous solution. After that, the reaction solution was extracted with ethyl acetate. The extract was washed with dilute aqueous hydrochloric acid, and crystals were precipitated by the concentration of the extract. The crystals were dispersed by the addition of 200 ml of hexane, recovered by filtration and dried, whereby 22.7 g (0.053 mol, yield: 53%) of compound (2-6) was obtained.

(Preparation of pigment solution and evaluation of agglomeration)

(Prescription a)

Two point zero (2.0) g of Cromophtal Jet Magenta DMQ (PR-122) (manufactured by Ciba Specialty Chemicals Inc.), 0.20 g of a dispersant, 0.80 g of glycerol, 0.20 g of a 2M sodium hydroxide aqueous solution, and 6.8 g of ion

exchange water were stirred and blended, and the pigment was dispersed by irradiation with ultrasonic wave intermittently (0.5 s. of irradiation/1.0 s. of stoppage) for 2 hours with an ultrasonic wave irradiating apparatus (Vibra-cell VC-750, taper microchip: φ 5 mm, Amplitude: 30%, manufactured by SONICS).

(Prescription b)

The pigment was dispersed according the same method as in prescription a, except that the sodium hydroxide aqueous solution was not used and the addition amount of ion exchange water was changed to 7.0 g.

(Preparation of treating liquid)

A treating liquid having the following composition was prepared.

TABLE 1

| | |
|---|---|
| Diethylene glycol | 20.0 g |
| OLFINE E1010 | 1.0 g |
| 2-Pyrrolidone-5-carboxylic acid | 1.0 g |
| Sodium hydroxide | 0.25 g |
| Ion exchange water | 77.8 g |

After 30 μl of the above treating liquid was dripped on art paper (Tokuryo art paper, both surfaces N, manufactured by Mitsubishi Paper Mills, Ltd.), a pigment dispersion was dripped in proportion of 10 μl per the above droplets, and the blotting was observed. The results obtained are shown in Table 2 below. A sample in which the pigment dispersion agglomerated and did not exhibit blotting at all was graded 'A', a sample that agglomerated but the reaction was slow was graded 'B', a sample that diffused while agglomerating was graded 'C', and a sample that did not agglomerate and blotting was observed was graded 'D'.

TABLE 2

| | Dispersant | Prescription of Dispersion | Agglomeration |
|---|---|---|---|
| Comparison | Demole SN-B (R-1) (mfd by Kao Corp.) | b | D |
| Comparison | Sodium dodecyl- sulfate (R-2) | b | D |
| Comparison | Sodium dodecylbenzenesulfonate (R-3) | b | B |
| Comparison | Sodium N-oleoyl-N-methyltaurine (R-4) | b | D |
| Comparison | Sodium succinate (R-5) | b | C |
| Invention | Compound (1-1) of the invention | b | A |
| Invention | Compound (1-6) of the invention | a | A |
| Invention | Compound (2-1) of the invention | a | A |
| Invention | Compound (2-3) of the invention | a | A |
| Invention | Compound (2-5) of the invention | a | A |
| Invention | Compound (2-6) of the invention | a | A |
| Invention | Compound (3-1) of the invention | a | A |
| Invention | Compovnd (3-2) of the Invention | b | A |
| Invention | Compound (X-2) of the invention | a | A |
| Invention | Compound (X-7) of the invention | b | A |
| Invention | Compound (X-8) of the invention | a | A |
| Invention | Compound (X-9) of the invention | a | A |

Comparative compound (R-1)

Demole SN-B (manufactured by Kao Corporation)

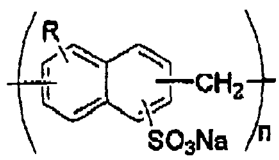

Comparative Compound (R-2)

Sodium dodecylsulfate

$C_{12}H_{25}OSO_3Na$

comparative Compound (R-3)

Sodium dodecylbenzensulfonate

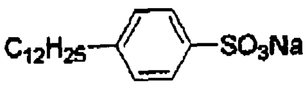

Comparative Compound (R-4)

Sodium N-oleoyl-N-methyltaurine

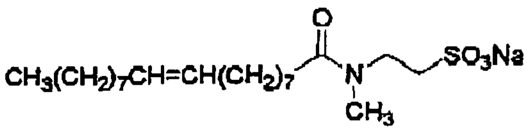

Comparative Compound (R-5)

Sodium dioctylsulfosuccinate

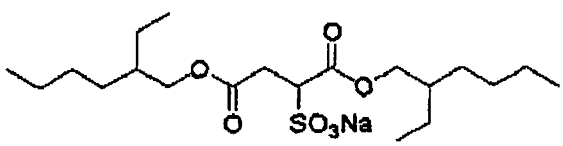

(Evaluation of dispersion stability)

For the purpose of making surface tension, 3 mass% of a surfactant (OLFINE E1010, manufactured by Nisshin Chemical Industry Co., Ltd.) was added to the pigment dispersion. Before and after the preservation of the pigment dispersion at 60°C for 7 days, the volume average particle size of the pigment dispersion was measured. On measurement, the pigment dispersion was diluted with an appropriate amount of water, and measurement was performed with a micro-track super fine particle size analyzer (UPA-EX150, manufactured by Nikkiso Co., Ltd.). In addition, measurement of the recording solution was performed with an R type viscometer (R500 series, manufactured by Tohki industry Co., Ltd.) at 25°C.

The volume average particle sizes and viscosity before preservation at 60°C each represented $M_{V0}$ [mn] and $\eta_0$ [mPa/s]. In addition, The volume average particle sizes and viscosity after preservation at 60°C each represented

$M_{V_1}$ [nm] and $\eta_1$ [mPa/s]. Furthermore, The results obtained are shown in Table 3 below, by using $\Delta M_v$ and $\Delta\eta$ which were defined by the following formulae as indexes of dispersion stability.

$$\Delta M_V \ [nm] = M_{V1} - M_{V0}$$

$$\Delta \eta \ [mPa/s] = \eta_1 - \eta_0$$

TABLE 3

| | Dispersant | $M_{V0}$ | $\eta_0$ | $M_{V1}$ | $\eta_1$ | $\Delta M_v$ | $\Delta\eta$ |
|---|---|---|---|---|---|---|---|
| Comparison | (R-1) | 123 | 6.2 | 190 | gelling | 123 | - |
| Comparison | (R-2) | 19 | 3.3 | 81 | 4.2 | 19 | 0.9 |
| Comparison | (R-3) | 155 | 18 | 223 | gelling | 155 | - |
| Comparison | (R-4) | 4 | 4.0 | 69 | 4.0 | 4 | 0 |
| Invention | Compound (X-2) of the invention | 4 | 3.8 | 76 | 3.9 | 4 | 0.1 |
| Invention | Compound (X-7) of the invention | 14 | 3.1 | 76 | 3.7 | 14 | 0.6 |
| Invention | Compound (X-8) of the invention | 7 | 3.5 | 70 | 3.8 | 7 | 0.3 |

In addition, the term "gelling" in the above table 3 represents a state of the aqueous recording solution which do not has flowability.

The lower value of $\Delta M_v$ and $\Delta\ \eta$ are, the higher dispersion stability is.

The agglomeration reaction of the pigment could be improved due to the variation of pH by introducing a carboxyl group as a dissociable group into the low molecular weight dispersant, which was difficult with a sulfo group. In addition, by introducing an amido group, high dispersion stability could be realized.

The present application claims foreign priority based on Japanese Patent Application (No. JP 2005-101818) filed March 31 of 2005 and Japanese Patent Application (No. JP 2005-207142) filed July 15 of 2005, and the contents thereof are incorporated herein by reference.

## Claims

1. An aqueous recording solution for ink jet printing comprising: a pigment; at least one of a water-soluble organic solvent and a water-soluble organic compound; water; and a dispersant having a molecular weight of 200 to 2, 000, the dispersant being represented by formula (I) :

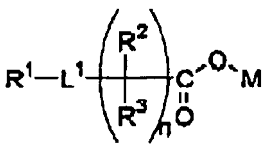

Formula (I)

wherein $R^1$ represents a substituent, $L^1$ represents a single bond or a divalent linking group, $R^2$ and $R^3$ each independently represents a hydrogen atom or a substituent, n represents an integer of 1 or more, and M represents a hydrogen atom or a monovalent cation, provided that $R^1$, $R^2$ and $R^3$ do not have a sulfo group, and the total number of carbon atoms of $R^1$, $R^2$ and $R^3$ is 13 or more.

2. The aqueous recording solution for ink jet printing as claimed in claim 1, wherein $R^1$ represents a substituted or unsubstituted alkyl group, and $R^2$ represents an aryloxy group.

3. The aqueous recording solution for ink jet printing as claimed in claim 1, wherein $L^1$ is one of an amido group, a sulfonamido group, an ester group, -O- and -S-.

4. The aqueous recording solution for ink jet printing as claimed in claim 1, wherein the dispersant is represented by one of formulae (X) and (XI) :

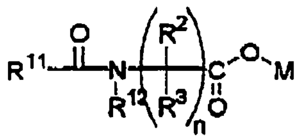

Formula (X)

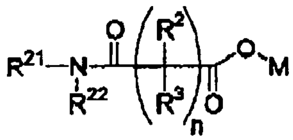

Formula (XI)

wherein $R^2$ and $R^3$ each independently has the same meaning as in formula (I), $R^{11}$ and $R^{21}$ each independently represents a substituted or unsubstituted alkyl group, aryl group, or a heterocyclic group, $R^{12}$ and $R^{22}$ each independently represents a hydrogen atom, or a substituted or unsubstituted alkyl group, and n represents an integer of 1 or more.

5. The aqueous recording solution for ink jet printing as claimed in claim 1, which has a coefficient of viscosity at 25°C of 1 to 20 mPa/s.

6. The aqueous recording solution for ink jet printing as claimed in claim 1, which has a volume average particle size measured by a dynamic light scattering method of 10 to 150 nm.

7. The aqueous recording solution for ink jet printing as claimed in claim 1, wherein the pigment particles have a ratio of the long axis to the short axis of 3 or less.

8. The aqueous recording solution for ink jet printing as claimed in claim 1, which contains from 10 to 25 mass% of the pigment.

9. An ink set comprising: a treating liquid that improve at least one of improving printing velocity, image quality, fixability and preservation stability; and a aqueous recording solution for ink jet printing as claimed in claim 1.

10. The ink set as claimed in claim 9, wherein the treating liquid is a liquid for agglomerating the recording solution by the variation of pH.

11. An ink jet printing device comprising the ink set as claimed in claim 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7001837 A
- JP 3204756 B
- JP 2004359841 A
- JP 5202328 A
- JP 9029950 A
- JP 2667401 B
- JP 2001199151 A
- JP 2002503745 T
- JP 2001192583 A
- JP 2952944 B
- JP 2969775 B
- JP 2970015 B
- JP 3097770 A
- JP 7078180 B
- JP 7033485 B
- JP 3014073 B
- JP 55006668 B
- JP 54010023 A
- JP 56147863 A
- JP 56147868 A
- JP 56147871 A
- JP 9279053 A
- JP 9279073 A
- US 4311775 A
- JP 2003322926 A
- JP 2004325707 A
- JP 2004309806 A
- JP 2005101818 A
- JP 2005207142 A